# EUROPEAN PATENT SPECIFICATION

(11) **EP 3 683 421 B1**
(45) Date of publication and mention of the grant of the patent: **15.06.2022**
(21) Application number: 20152112.7
(22) Date of filing: 16.01.2020
(51) Int. Cl.: F02C 6/18, F01K 23/10, F01K 25/10, F02C 7/18

(54) **WORK RECOVERY SYSTEM FOR A GAS TURBINE ENGINE UTILIZING A RECUPERATED SUPERCRITICAL CO2 CYCLE DRIVEN BY COOLING AIR WASTE HEAT**
ARBEITSRÜCKGEWINNUNGSSYSTEM FÜR EINEN GASTURBINENMOTOR UNTER VERWENDUNG EINES ÜBERKRITISCHEN CO2-ZYKLUS, DER DURCH DIE ABWÄRME DER KÜHLLUFT ANGETRIEBEN WIRD
SYSTÈME DE RÉCUPÉRATION DE TRAVAIL POUR UN MOTEUR À TURBINE À GAZ UTILISANT UN CYCLE DE CO2 SUPERCRITIQUE RÉCUPÉRÉ, ENTRAÎNÉ PAR LA CHALEUR RÉSIDUELLE DE L'AIR DE REFROIDISSEMENT

(30) Priority: 16.01.2019 US 201916248922
(43) Date of publication of application: 22.07.2020
(73) Proprietor: Raytheon Technologies Corporation, Farmington, CT 06032 (US)
(72) Inventor: McAULIFFE, Brendan T., West Hartford, CT Connecticut 06119 (US); STAUBACH, Joseph B., Colchester, CT Connecticut 06415 (US); SOMANATH, Nagendra, South Windsor, CT Connecticut 06074 (US)
(74) Representative: Dehns

(56) References cited:
- US-A1- 2012 067 055
- US-A1- 2017 152 765
- US-A1- 2017 356 340
- KIM MIN SEOK ET AL: "Study on the supercritical CO2power cycles for landfill gas firing gas turbine bottoming cycle", ENERGY, ELSEVIER, AMSTERDAM, NL, vol. 111, 17 June 2016 (2016-06-17), pages 893-909, XP029721633, ISSN: 0360-5442, DOI: 10.1016/J.ENERGY.2016.06.014
- MARCHIONNI MATTEO ET AL: "Techno-economic assessment of Joule-Brayton cycle architectures for heat to power conversion from high-grade heat sources using CO2in the supercritical state", ENERGY, ELSEVIER, AMSTERDAM, NL, vol. 148, 4 February 2018 (2018-02-04), pages 1140-1152, XP085361812, ISSN: 0360-5442, DOI: 10.1016/J.ENERGY.2018.02.005
- YOONHAN AHN ET AL: "Review of supercritical CO2 power cycle technology and current status of research and development", NUCLEAR ENGINEERING AND TECHNOLOGY, vol. 47, no. 6, 1 October 2015 (2015-10-01), pages 647-661, XP055694583, KP ISSN: 1738-5733, DOI: 10.1016/j.net.2015.06.009

## Description

### TECHNICAL FIELD

The present disclosure relates generally to a system for recovering waste heat in a gas turbine engine, and more specifically to a work recovery system utilizing a supercritical CO2 cycle to recover work from excess heat.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. As the turbine section is connected to the compressor section via a shaft, the rotation of the turbine section further drives the compressor section to rotate. In some examples, a fan is also connected to the shaft and is driven to rotate via rotation of the turbine as well.

The compression process of the gas turbine engine results in a rise in the temperature of the gas at the compressor exit due to increasing pressure and component inefficiencies. At certain elevated pressures, this compressed air becomes too hot to be used for the purposes of turbine cooling and must be itself cooled. The waste heat that is generated from this cooled cooling air is imparted to the exhaust flow and expelled without providing additional work. Waste heat is one of the primary sources of loss (inefficiency) in any thermodynamic cycle, and minimization of waste heat in an engine therefore increases the efficiency of the engine.

US 2012/067055 A1 discloses a prior art gas turbine engine as set forth in the preamble of claim 1.

### SUMMARY OF THE INVENTION

From one aspect, there is provided a gas turbine engine as recited in claim 1.

There is also provided a method for recovering work from waste heat in a gas turbine engine as recited in claim 9.

Features of embodiments are set forth in the dependent claims.

These and other features of the present invention can be best understood from the following specification and drawings, the following of which is a brief description.

### BRIEF DESCRIPTION OF THE DRAWINGS

Figure 1 illustrates a high level schematic view of an exemplary gas turbine engine.
Figure 2 schematically illustrates a gas turbine engine including a cooled cooling air driven recuperating supercritical CO2 cycle.
Figure 3 illustrates a recuperating supercritical CO2 cycle diagram.

### DETAILED DESCRIPTION

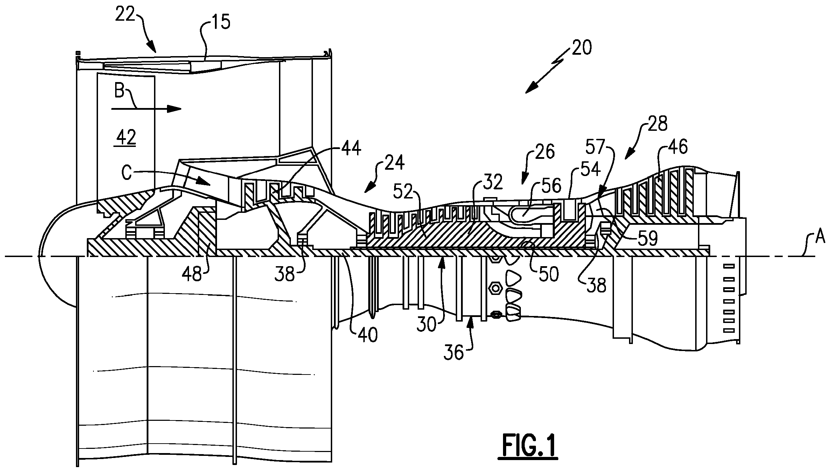

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including single spool or three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including turbojet or direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^^{0.5} (where °R = K x 9/5). The "Low corrected fan tip speed" as disclosed herein according to one non-limiting embodiment is less than about 1150 ft / second (350.5 meters/second).

Existing gas turbine engines, such as the exemplary geared turbofan engine of Figure 1, generate substantial amounts of heat that is exhausted from the turbine section 28 into a surrounding atmosphere. The exhaust heat represents wasted energy, and is a large source of inefficiency in the gas turbine engines.

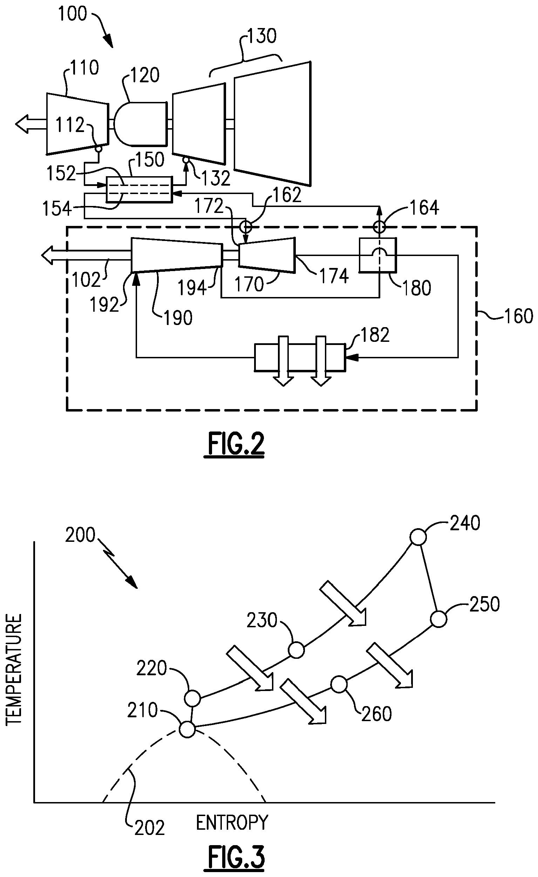

With continued reference to Figure 1, Figure 2 schematically illustrates a gas turbine engine 100, including a compressor section 110, a combustor section 120 and a turbine section 130, all of which are connected via a primary fluid flowpath. Existing designs for maximum high pressure gas turbine engines expel excess heat from cooling turbine cooling air the ambient atmosphere, without using the excess heat to generate additional shaft work.

In order to recapture the waste heat within the turbine engine system 100 of Figure 2 and convert the waste heat to work, a heat exchanger 150 is connected to a compressor bleed 112 and a turbine inlet 132. The heat exchanger 150 provides a flowpath 152 that connects the bleed 112 to the inlet 132, and bypasses the combustor 120. In one example, the compressor bleed 112 is at or downstream of an aft most compressor stage and the turbine inlet 132 is at or upstream of the upstream most turbine stage. The heat exchanger 150 extracts heat from the compressor 110 flow and provides it to a waste heat recovery system 160 which in turn uses the waste heat to generate work and provide the generated work to one or more engine system within the gas turbine engine. The heat extracted from flowpath 152 enables the air at turbine inlet 132 to be at an appropriate pressure and temperature to be used to cool turbine 130. The heat exchanger 150 includes a first fluid pathway (referred to as the hot passage) that connects the compressor bleed 112 to the turbine inlet 132, and a second fluid passageway 154 (referred to as the cold fluid passageway) that connects an inlet 162 and an outlet 164 of the waste heat recovery system 160.

Within the heat exchanger 150 heat is transferred from the first fluid pathway 152 to the second fluid pathway 154, and the second fluid pathway is connected to a supercritical CO2 (sCO2) Brayton cycle (referred to herein as the waste heat recovery system 160). The waste heat recovery system 160 converts the heat into rotational work which is provided to at least one additional engine system. The waste heat recovery system 160 additionally recuperates waste heat within the recovery system 160 and is referred to as a recuperating work recovery cycle.

Included within the waste heat recovery system 160 is a turbine 170 with an inlet 172 connected to an output of the heat exchanger 150. The output of the heat exchanger 150 is part of the second fluid passageway 154. The turbine 170 expands the heated working fluid and expels the heated working fluid through a turbine outlet 174. The expelled working fluid is passed through a relatively hot passage of a recuperating heat exchanger 180, and is passed to a relatively hot passage of a heat rejection heat exchanger 182. After passing through the heat rejection heat exchanger 182, the working fluid is passed to an inlet 192 of a compressor 190. The compressor 190 compresses the working fluid, and passes the compressed working fluid from a compressor outlet 192 to a cold passage of the recuperating heat exchanger 180.

During operation of the waste heat recovery system 160, the compressor 190 compresses the working fluid, and passes the compressed working fluid through the recuperating heat exchanger 180 and the heat exchanger 150, causing the compressed working fluid to be heated in each of the heat exchangers 150, 180. The heated working fluid is provided to the inlet 172 of the turbine 170 and expanded through the turbine 170, driving the turbine 170 to rotate. The rotation of the turbine 170 drives rotation of the compressor 190 and of an output shaft 102. The output shaft 102 is mechanically connected to one, or more, additional turbine engine systems and provides work to those systems using any conventional means for transmitting rotational work. Additionally, the rotational work can be converted into electricity and used to power one or more engine or aircraft systems. By way of example, the means for transmitting rotational work can include a drive shaft, a gear system, an electrical generator and distribution system, or any similar structure.

In the illustrated example, the working fluid is a CO2 fluid, and is maintained at or above a supercritical point throughout the entirety of the working cycle. Due to being maintained at or above the supercritical point, the system 160 is referred to as a supercritical CO2 cycle (sCO2 cycle). With continued reference to Figure 2, Figure 3 illustrates a chart 200 showing a state of the working fluid throughout a working cycle of the waste heat recovery system 160 as a temperature with respect to entropy. Initially, the working fluid starts at or above a peak of a vapor dome 202 at point 210. The vapor dome 202 represents an upper boundary above which the working fluid is at the corresponding supercritical point. The starting point 210 is the state of the working fluid at the inlet of the compressor 190, prior to the working fluid undergoing compression by the compressor.

The working fluid is compressed in the compressor 190, causing the temperature and pressure of the working fluid to increase, while also imparting a minimal increase in the entropy of the working fluid until the working fluid is expelled from the compressor 190. Point 220 of the chart 200 represents the state of the working fluid at the compressor outlet 194. After exiting the compressor 190, the working fluid is passed through the recuperating heat exchanger 180, where the temperature and entropy of the working fluid are increased until an outlet of the recuperating heat exchanger 180 illustrated at point 230.

The outlet of the recuperating heat exchanger 180 is provided to the heat exchanger 150, across which the entropy and temperature of the working fluid are again increased until a point 240. The point 240 represents the state of the working fluid at the outlet of the heat exchanger 150 and at the inlet 172 of the turbine 170. As power is extracted from the working fluid in the turbine 170, the temperature and pressure drops, but neither fall below the level at the start of the cycle (point 210). After work has been extracted by the turbine 170, the expanded working fluid is provided to the recuperating heat exchanger 180 and a portion of the excess heat is transferred from the expanded working fluid to working fluid between points 220 and 230 of the cycle 200. The state of the working fluid at the outlet of the recuperating heat exchanger 180, and the inlet of the heat rejection heat exchanger 182 is illustrated at point 260.

In order to optimize operations of the sCO2 waste heat recovery system 160, the system 160 uses the heat rejection heat exchanger 182 to return the state of the working fluid to as close to the starting point 210 as possible. The waste heat can be dumped into any number of heat sinks within the gas turbine engine including, but not limited to, fan duct air, ram air, fuel, and a transcritical CO2 refrigeration cycle.

According to the invention, as illustrated in Figure 3, the starting point of the cycle 200 is immediately at the vapor dome 202. In practical examples, the starting point can be targeted at slightly above the peak of the vapor dome in order to prevent minor variations during operation and other practical considerations from causing the working fluid to fall below the vapor dome 202.

While described above in conjunction with a geared turbofan engine, it is appreciated that the waste heat recovery system described herein can be utilized in conjunction with any other type of turbine engine incorporating a cooled cooling air system with only minor modifications that are achievable by one of skill in the art.

The cooled cooling air system enables a main engine architecture that drives to high pressures by reducing the temperature of the turbine cooling air. The system described herein recovers some work from the cooled cooling air system that is normally dumped into a heat sink.

Additionally, the mass flow of the CO2 in the system described above, and therefore all the component volumes, are sized specifically to provide the amount of cooling required to reduce the temperature of the turbine cooling air. The bleed turbine air will be on the order of 5% of core flow.

A further benefit of this system is that due to the high density and heat capacity of supercritical CO2, a higher level of compaction can be achieved relative to comparable air systems for cooled cooling air. This is significant for weight and engine integration.

It is further understood that any of the above described concepts can be used alone or in combination with any or all of the other above described concepts. Although an embodiment of this invention has been disclosed, a worker of ordinary skill in this art would recognize that certain modifications would come within the scope of this disclosure. For that reason, the following claims should be studied to determine the true scope of the invention.

## Claims

1. A gas turbine engine (20; 100) comprising:
a primary flowpath (C) fluidly connecting a compressor section (24; 110), a combustor section (26; 110), and a turbine section (28; 130); and
a heat exchanger (150) including a first inlet connected to a high pressure compressor bleed (112), a first outlet connected to a high pressure turbine inlet (132),
wherein the heat exchanger (150) further includes a second inlet fluidly connected to a supercritical CO2 (sCO2) work recovery cycle (160) and a second outlet connected to the sCO2 work recovery cycle (160) and the sCO2 work recovery cycle (160) is a recuperated Brayton cycle (160),
wherein the sCO2 work recovery cycle (160) comprises a turbine (170) having a working fluid turbine inlet (172) connected to the second outlet of the heat exchanger (150) and a spent working fluid turbine outlet (174) connected to a working fluid compressor inlet (192) of a working fluid compressor (190), the working fluid compressor (190) further including a working fluid compressor outlet (194) connected to the second inlet of the heat exchanger (150),
wherein a fluid pressure at the working fluid compressor inlet (92) is at least a supercritical pressure of a working fluid in the working fluid work recovery cycle (160) during standard operations,
**characterised in that**
during standard operations, the fluid pressure and temperature at the working fluid compressor inlet (192) is at or above a peak of a vapor dome (202) of the working fluid in the sCO2 work recovery cycle (160), allowing sufficient margin such for fluid property and operational fluctuations such that the compressor inlet fluid is not located within the vapor dome (202).

2. The gas turbine engine (20; 100) of claim 1, wherein the high pressure compressor bleed (112) is disposed at an outlet of the compressor section (24; 110) of the gas turbine engine (20; 100).

3. The gas turbine engine (20; 100) of claim 1 or 2, wherein the high pressure turbine inlet (132) is upstream of a first turbine stage.

4. The gas turbine engine (20; 100) of any preceding claim, further comprising a recuperator heat exchanger (180) including a first flowpath connecting the working fluid compressor outlet (194) to the second inlet of the heat exchanger (150) and a second flowpath connecting the working fluid turbine outlet (174) to the working fluid compressor inlet (192).

5. The gas turbine engine (20; 100) of any preceding claim, wherein the working fluid turbine outlet (174) is connected to the working fluid compressor inlet (192) via a heat rejection heat exchanger (182), and wherein the heat rejection heat exchanger (182) is configured to expel waste heat.

6. The gas turbine engine (20; 100) of any preceding claim, wherein the recuperated work recovery cycle (160) includes a mechanical output (102), and wherein the mechanical output (102) is configured to transmit rotational work mechanically or electrically from the recuperated work recovery cycle to at least one other engine system.

7. The gas turbine engine (20; 100) of claim 6, wherein the mechanical output (102) is connected to at least one of a drive shaft, a gear system, and an electrical generator and distribution system.

8. The gas turbine engine (20; 100) of any preceding claim, wherein the sCO2 work recovery cycle (160) contains a CO2 fluid and the CO2 fluid is maintained at at least a supercritical pressure throughout an entirety of the sCO2 cycle.

9. A method for recovering work from waste heat in a gas turbine engine (20; 100) comprising:
heating a supercritical CO2 (sCO2) working fluid in a heat exchanger (150) using a heating flowpath, the heating flowpath connecting a gas turbine engine compressor bleed (112) to a gas turbine engine turbine stage inlet (132);
providing the heated sCO2 working fluid to a waste recovery turbine (170);
expanding the heated sCO2 working fluid across the waste recovery turbine (170), thereby driving the waste recovery turbine (170) to rotate; and
providing sCO2 working fluid from an outlet (174) of the waste recovery turbine (170) to an inlet of a compressor (190) and compressing the sCO2 working fluid;
providing the compressed sCO2 working fluid to an inlet (172) of the waste recovery turbine (170);
**characterised in that** the method comprises
maintaining the sCO2 working fluid above a supercritical point through an entirety of the operations.

10. The method of claim 9, further comprising passing the sCO2 working fluid from the outlet (174) of the waste recovery turbine (170) through a recuperator heat exchanger (180), and passing an sCO2 working fluid from the compressor (190) through the recuperator heat exchanger (180) prior to providing the sCO2 working fluid from the compressor (190) to the heat exchanger (150) thereby transferring heat from the sCO2 working fluid exiting the turbine (170) to the sCO2 working fluid entering the heat exchanger (150).

11. The method of claim 9 or 10, wherein providing sCO2 working fluid from the outlet (174) of the waste recovery turbine (170) to the inlet (192) of the compressor (190) comprises passing the sCO2 working fluid through a heat rejection heat exchanger (182), thereby dumping waste heat to a heat sink, for example at least one of fan duct air, ram air, fuel, and a transcritical CO2 refrigeration cycle;

12. The method of claim 9, 10 or 11, wherein providing sCO2 working fluid from the outlet (174) of the waste recovery turbine (170) to the inlet (192) of the compressor (190) comprises reducing a temperature of the sCO2 working fluid to a temperature and pressure above a supercritical temperature and pressure of the working fluid at the working fluid compressor inlet (192), wherein the temperature and pressure above the supercritical temperature and pressure allows a margin for fluid property and operational fluctuations such that the compressor inlet fluid does not fall within a vapor dome (202).

13. The method of any of claims 9 to 12, wherein expanding the heated sCO2 working fluid across the waste recovery turbine (170), thereby driving the waste recovery turbine (170) to rotate further comprises transmitting rotational work from the waste recovery turbine (170) to at least one engine system in the gas turbine engine (20; 100).

14. The method of any of claims 9 to 13, wherein the heat exchanger (150) is disposed in a primary flowpath (C) of the gas turbine engine (20; 100) and is aft of a turbine section (28; 130) of the gas turbine engine (20; 100).

15. The method of any of claims 9 to 14, wherein compressing the sCO2 working fluid comprises driving rotation of the compressor (190) via the waste recovery turbine (170).

## Patentansprüche

1. Gasturbinenmotor (20; 100), umfassend:
einen Hauptströmungsweg (C), der einen Verdichterabschnitt (24; 110), einen Brennkammerabschnitt (26; 110) und einen Turbinenabschnitt (28; 130) fluidisch verbindet; und
einen Wärmetauscher (150), der einen ersten Einlass, der mit einer Hochdruckverdichter-Abblaseleitung (112) verbunden ist, einen ersten Auslass, der mit einem Hochdruckturbineneinlass (132) verbunden ist, beinhaltet,
wobei der Wärmetauscher (150) ferner einen zweiten Einlass, der fluidisch mit einem überkritischen CO2- (sCO2)-Arbeitsrückgewinnungszyklus (160) verbunden ist, und einen zweiten Auslass, der mit dem sCO2-Arbeitsrückgewinnungszyklus (160) verbunden ist, beinhaltet, und der sCO2-Arbeitsrückgewinnungszyklus (160) ein zurückgewonnener Brayton-Zyklus (160) ist,
wobei der sCO2-Arbeitsrückgewinnungszyklus (160) eine Turbine (170) umfasst, die einen Arbeitsfluid-Turbineneinlass (172) aufweist, der mit dem zweiten Auslass des Wärmetauschers (150) verbunden ist, und einen Turbinenauslass (174) verbrauchten Arbeitsfluids, der mit einem Arbeitsfluid-Verdichtereinlass (192) eines Arbeitsfluidverdichters (190) verbunden ist, wobei der Arbeitsfluidverdichter (190) ferner einen Arbeitsfluid-Verdichterauslass (194) umfasst, der mit dem zweiten Einlass des Wärmetauschers (150) verbunden ist,
wobei ein Fluiddruck an dem Arbeitsfluid-Verdichtereinlass (92) mindestens ein überkritischer Druck eines Arbeitsfluids in dem Arbeitsfluid-Arbeitsrückgewinnungszyklus (160) während Standardoperationen ist,
**dadurch gekennzeichnet, dass**
während der Standardoperationen der Fluiddruck und die Temperatur an dem Arbeitsfluid-Verdichtereinlass (192) an oder über einer Spitze einer Dampfkuppel (202) des Arbeitsfluids in dem sCO2-Arbeitsrückgewinnungszyklus (160) liegen, was einen ausreichenden Spielraum für Fluideigenschafts- und Betriebsschwankungen derart erlaubt, dass sich das Verdichtereinlassfluid nicht innerhalb der Dampfkuppel (202) befindet.

2. Gasturbinenmotor (20; 100) nach Anspruch 1, wobei die Hochdruckverdichter-Abblaseleitung (112) an einem Auslass des Verdichterabschnitts (24; 110) des Gasturbinenmotors (20; 100) angeordnet ist.

3. Gasturbinenmotor (20; 100) nach Anspruch 1 oder 2, wobei der Hochdruckturbineneinlass (132) einer ersten Turbinenstufe vorgeschaltet ist.

4. Gasturbinenmotor (20; 100) nach einem der vorstehenden Ansprüche, der ferner einen Rekuperator-Wärmetauscher (180) umfasst, der einen ersten Strömungsweg, der den Arbeitsfluid-Verdichterauslass (194) mit dem zweiten Einlass des Wärmetauschers (150) verbindet, und einen zweiten Strömungsweg, der den Arbeitsfluid-Turbinenauslass (174) mit dem Arbeitsfluid-Verdichtereinlass (192) verbindet, beinhaltet.

5. Gasturbinenmotor (20; 100) nach einem der vorstehenden Ansprüche, wobei der Arbeitsfluid-Turbinenauslass (174) mit dem Arbeitsfluid-Verdichtereinlass (192) über einen Wärmeabfuhr-Wärmetauscher (182) verbunden ist, und wobei der Wärmeabfuhr-Wärmetauscher (182) dazu konfiguriert ist, Abwärme auszustoßen.

6. Gasturbinenmotor (20; 100) nach einem der vorstehenden Ansprüche, wobei der zurückgewonnene Arbeitsrückgewinnungszyklus (160) einen mechanischen Ausgang (102) beinhaltet, und wobei der mechanische Ausgang (102) dazu konfiguriert ist, Rotationsarbeit mechanisch oder elektrisch von dem zurückgewonnenen Arbeitsrückgewinnungszyklus zu mindestens einem anderen Motorsystem zu übertragen.

7. Gasturbinenmotor (20; 100) nach Anspruch 6, wobei der mechanische Ausgang (102) mit mindestens einem von einer Antriebswelle, einem Getriebesystem und einem elektrischen Generator und einem Verteilungssystem verbunden ist.

8. Gasturbinenmotor (20; 100) nach einem der vorstehenden Ansprüche, wobei der sCO2-Arbeitsrückgewinnungszyklus (160) ein CO2 -Fluid enthält, und das CO2-Fluid während einer Gesamtheit des sCO2-Zyklus auf mindestens einem überkritischen Druck gehalten wird.

9. Verfahren zur Arbeitsrückgewinnung aus Abwärme in einem Gasturbinenmotor (20; 100), umfassend:
Erhitzen eines überkritischen CO2-(sCO2)-Arbeitsfluids in einem Wärmetauscher (150) unter Verwenden eines Heizströmungswegs, wobei der Heizströmungsweg eine Gasturbinenmotor-Verdichter-Abblaseleitung (112) mit einem Gasturbinenmotor-Turbinenstufeneinlass (132) verbindet;
Bereitstellen des erhitzten sCO2-Arbeitsfluids zu einer Abwärmerückgewinnungsturbine (170);
Expandieren des erhitzten sCO2-Arbeitsfluids über die Abwärmerückgewinnungsturbine (170), wodurch die Abwärmerückgewinnungsturbine (170) zum Rotieren angetrieben wird; und
Bereitstellen von sCO2-Arbeitsfluid von einem Auslass (174) der Abwärmerückgewinnungsturbine (170) zu einem Einlass eines Verdichters (190) und Verdichten des sCO2-Arbeitsfluids;
Bereitstellen des verdichteten sCO2-Arbeitsfluids zu einem Einlass (172) der Abwärmerückgewinnungsturbine (170);
**dadurch gekennzeichnet, dass** das Verfahren
das Halten des sCO2-Arbeitsfluids über einem überkritischen Punkt während einer Gesamtheit der Operationen umfasst.

10. Verfahren nach Anspruch 9, das ferner das Übergeben des sCO2-Arbeitsfluids von dem Auslass (174) der Abwärmerückgewinnungsturbine (170) durch einen Rekuperator-Wärmetauscher (180) und Übergeben eines sCO2-Arbeitsfluids von dem Verdichter (190) durch den Rekuperator-Wärmetauscher (180), bevor das sCO2-Arbeitsfluid von dem Verdichter (190) zu dem Wärmetauscher (150) bereitgestellt wird, umfasst, wodurch Wärme von dem sCO2-Arbeitsfluid, das aus der Turbine (170) austritt, auf das sCO2-Arbeitsfluid, das in den Wärmetauschereinlass (150) eintritt, übertragen wird.

11. Verfahren nach Anspruch 9 oder 10, wobei das Bereitstellen von sCO2-Arbeitsfluid von dem Auslass (174) der Abwärmerückgewinnungsturbine (170) zu dem Einlass (192) des Verdichters (190) das Übergeben des sCO2-Arbeitsfluids durch einen Wärmeabfuhr-Wärmetauscher (182) umfasst, wodurch Abwärme an eine Wärmesenke, zum Beispiel mindestens eines von Lüfterkanalluft, Staudruck-Luft, Kraftstoff und einem transkritischen CO2-Kältezyklus abgegeben wird;

12. Verfahren nach Anspruch 9, 10 oder 11, wobei das Bereitstellen von sCO2-Arbeitsfluid von dem Auslass (174) der Abwärmerückgewinnungsturbine (170) zu dem Einlass (192) des Verdichters (190) das Reduzieren einer Temperatur des sCO2-Arbeitsfluids auf eine Temperatur und einen Druck über einer überkritischen Temperatur und einem überkritischen Druck des Arbeitsfluids an dem Arbeitsfluid-Verdichtereinlass (192) umfasst, wobei die Temperatur und der Druck über der überkritischen Temperatur und dem überkritischen Druck einen Spielraum für Fluideigenschafts- und Betriebsfluktuationen derart erlaubt, dass das Verdichtereinlassfluid nicht innerhalb einer Dampfkuppel (202) fällt.

13. Verfahren nach einem der Ansprüche 9 bis 12, wobei das Expandieren des erhitzten sCO2-Arbeitsfluids über die Abwärmerückgewinnungsturbine (170), wodurch die Abwärmerückgewinnungsturbine (170) zum Rotieren angetrieben wird, ferner das Übertragen von Rotationsarbeit von der Abwärmerückgewinnungsturbine (170) zu mindestens einem Motorsystem in dem Gasturbinenmotor (20; 100) umfasst.

14. Verfahren nach einem der Ansprüche 9 bis 13, wobei der Wärmetauscher (150) in einem Hauptströmungsweg (C) des Gasturbinenmotors (20; 100) angeordnet ist und sich hinter einem Turbinenabschnitt (28; 130) des Gasturbinenmotors (20; 100) befindet.

15. Verfahren nach einem der Ansprüche 9 bis 14, wobei das Verdichten des sCO2-Arbeitsfluids das Antreiben der Rotation des Verdichters (190) über die Abwärmerückgewinnungsturbine (170) umfasst.

## Revendications

1. Moteur à turbine à gaz (20 ; 100), comprenant :
un trajet d'écoulement primaire (C) connectant fluidiquement une section de compresseur (24 ; 110), une section de chambre de combustion (26 ; 110) et une section de turbine (28 ; 130) ; et
un échangeur de chaleur (150) comportant une première entrée connectée à une purge de compresseur haute pression (112), une première sortie connectée à une entrée de turbine haute pression (132),
dans lequel l'échangeur de chaleur (150) comporte en outre une seconde entrée connectée fluidiquement à un cycle de récupération de travail de CO2 supercritique (sCO2) (160) et une seconde sortie connectée au cycle de récupération de travail de sCO2 (160) et le cycle de récupération de travail de sCO2 (160) est un cycle de Brayton récupéré (160),
dans lequel le cycle de récupération de travail de sCO2 (160) comprend une turbine (170) ayant une entrée de turbine de fluide de travail (172) connectée à la seconde sortie de l'échangeur de chaleur (150) et une sortie de turbine de fluide de travail usé (174) connectée à une entrée de compresseur de fluide de travail (192) d'un compresseur de fluide de travail (190), le compresseur de fluide de travail (190) comportant en outre une sortie de compresseur de fluide de travail (194) connectée à la seconde entrée de l'échangeur de chaleur (150),
dans lequel une pression de fluide au niveau de l'entrée de compresseur de fluide de travail (92) est au moins une pression supercritique d'un fluide de travail dans le cycle de récupération de travail de fluide de travail (160) pendant des opérations standard,
**caractérisé en ce que**
pendant des opérations standard, la pression et la température de fluide au niveau de l'entrée de compresseur de fluide de travail (192) sont égales ou supérieures à un pic d'un dôme de vapeur (202) du fluide de travail dans le cycle de récupération de travail de sCO2 (160), laissant une marge suffisante pour une propriété de fluide et des fluctuations opérationnelles de sorte que le fluide d'entrée de compresseur ne se trouve pas à l'intérieur du dôme de vapeur (202).

2. Moteur à turbine à gaz (20 ; 100) selon la revendication 1, dans lequel la purge de compresseur haute pression (112) est disposée au niveau d'une sortie de la section de compresseur (24 ; 110) du moteur à turbine à gaz (20 ; 100).

3. Moteur à turbine à gaz (20 ; 100) selon la revendication 1 ou 2, dans lequel l'entrée de turbine haute pression (132) est en amont d'un premier étage de turbine.

4. Moteur à turbine à gaz (20 ; 100) selon une quelconque revendication précédente, comprenant en outre un échangeur de chaleur récupérateur (180) comportant un premier trajet d'écoulement connectant la sortie de compresseur de fluide de travail (194) à la seconde entrée de l'échangeur de chaleur (150) et un second trajet d'écoulement connectant la sortie de turbine de fluide de travail (174) à l'entrée de compresseur de fluide de travail (192).

5. Moteur à turbine à gaz (20 ; 100) selon une quelconque revendication précédente, dans lequel la sortie de turbine de fluide de travail (174) est connectée à l'entrée de compresseur de fluide de travail (192) via un échangeur de chaleur à rejet de chaleur (182), et dans lequel l'échangeur de chaleur à rejet de chaleur (182) est configuré pour expulser la chaleur résiduelle.

6. Moteur à turbine à gaz (20 ; 100) selon une quelconque revendication précédente, dans lequel le cycle de récupération de travail récupéré (160) comporte une sortie mécanique (102), et dans lequel la sortie mécanique (102) est configurée pour transmettre un travail rotationnel mécaniquement ou électriquement du cycle de récupération de travail récupéré à au moins un autre système de moteur.

7. Moteur à turbine à gaz (20 ; 100) selon la revendication 6, dans lequel la sortie mécanique (102) est connectée à au moins l'un parmi un arbre d'entraînement, un système d'engrenage et un générateur électrique et un système de distribution.

8. Moteur à turbine à gaz (20 ; 100) selon une quelconque revendication précédente, dans lequel le cycle de récupération de travail de sCO2 (160) contient un fluide de CO2 et le fluide de CO2 est maintenu à au moins une pression supercritique pendant l'ensemble du cycle de sCO2.

9. Procédé de récupération de travail à partir de la chaleur résiduelle dans un moteur à turbine à gaz (20 ; 100) comprenant :
le chauffage d'un fluide de travail de CO2 supercritique (sCO2) dans un échangeur de chaleur (150) à l'aide d'un trajet d'écoulement de chauffage, le trajet d'écoulement de chauffage connectant une purge de compresseur de moteur à turbine à gaz (112) à une entrée d'étage de turbine de moteur à turbine à gaz (132) ;
la fourniture du fluide de travail de sCO2 chauffé à une turbine de récupération de déchets (170) ;
la dilatation du fluide de travail de sCO2 chauffé à travers la turbine de récupération des déchets (170), entraînant ainsi la rotation de la turbine de récupération de déchets (170) ; et
la fourniture d'un fluide de travail de sCO2 d'une sortie (174) de la turbine de récupération de déchets (170) à une entrée d'un compresseur (190) et la compression du fluide de travail de sCO2 ;
la fourniture du fluide de travail de sCO2 comprimé à une entrée (172) de la turbine de récupération de déchets (170) ;
**caractérisé en ce que** le procédé comprend
le maintien du fluide de travail de sCO2 au-dessus d'un point supercritique pendant l'ensemble des opérations.

10. Procédé selon la revendication 9, comprenant en outre le passage du fluide de travail de sCO2 de la sortie (174) de la turbine de récupération de déchets (170) à travers un échangeur de chaleur récupérateur (180), et le passage d'un fluide de travail de sCO2 du compresseur (190) à travers l'échangeur de chaleur récupérateur (180) avant la fourniture du fluide de travail de sCO2 du compresseur (190) à l'échangeur de chaleur (150) transférant ainsi la chaleur du fluide de travail de sCO2 sortant de la turbine (170) au fluide de travail de sCO2 entrant dans l'échangeur de chaleur (150).

11. Procédé selon la revendication 9 ou 10, dans lequel la fourniture de fluide de travail de sCO2 de la sortie (174) de la turbine de récupération de déchets (170) à l'entrée (192) du compresseur (190) comprend le passage du fluide de travail de sCO2 à travers un échangeur de chaleur à rejet de chaleur (182), évacuant ainsi la chaleur résiduelle vers un dissipateur thermique, par exemple au moins l'un parmi l'air de conduit de soufflante, l'air dynamique, le carburant et un cycle de réfrigération au CO2 transcritique ;

12. Procédé selon la revendication 9, 10 ou 11, dans lequel la fourniture de fluide de travail de sCO2 de la sortie (174) de la turbine de récupération de déchets (170) à l'entrée (192) du compresseur (190) comprend la réduction d'une température du fluide de travail de sCO2 à une température et une pression au-dessus d'une température et d'une pression supercritiques du fluide de travail au niveau de l'entrée de compresseur de fluide de travail (192), dans lequel la température et la pression au-dessus de la température et de la pression supercritiques permettent une marge pour une propriété de fluide et des fluctuations opérationnelles de sorte que le fluide d'entrée de compresseur ne tombe pas à l'intérieur d'un dôme de vapeur (202) .

13. Procédé selon l'une quelconque des revendications 9 à 12, dans lequel la dilatation du fluide de travail de sCO2 chauffé à travers la turbine de récupération de déchets (170), entraînant ainsi la rotation de la turbine de récupération de déchets (170), comprend en outre la transmission du travail rotationnel de la turbine de récupération de déchets (170) à au moins un système de moteur dans le moteur à turbine à gaz (20 ; 100) .

14. Procédé selon l'une quelconque des revendications 9 à 13, dans lequel l'échangeur de chaleur (150) est disposé dans un trajet d'écoulement primaire (C) du moteur à turbine à gaz (20 ; 100) et est à l'arrière d'une section de turbine (28 ; 130) du moteur à turbine à gaz (20 ; 100).

15. Procédé selon l'une quelconque des revendications 9 à 14, dans lequel la compression du fluide de travail de sCO2 comprend une rotation d'entraînement du compresseur (190) via la turbine de récupération de déchets (170).
